# EUROPEAN PATENT SPECIFICATION

(11) **EP 2 832 468 B1**
(45) Date of publication and mention of the grant of the patent: **30.11.2016**
(21) Application number: 12873184.1
(22) Date of filing: 28.11.2012
(51) Int. Cl.: B21D 39/08, B21D 39/10, B21D 53/06, F28F 9/16, G21D 1/00

(54) **TUBE EXPANSION METHOD**
ROHREXPANSIONSVERFAHREN
MÉTHODE DE MANDRINAGE DES TUYAUX

(30) Priority: 29.03.2012 JP 2012077915
(43) Date of publication of application: 04.02.2015
(73) Proprietor: Mitsubishi Heavy Industries, Ltd., Tokyo 108-8215 (JP)
(72) Inventor: ISHIGAMI, Yoichi, Minato-ku, Tokyo 108-8215 (JP); KANABUSHI, Takashi, Minato-ku, Tokyo 108-8215 (JP); KAGAWA, Takashi, Minato-ku, Tokyo 108-8215 (JP); KADOWAKI, Hirokazu, Minato-ku, Tokyo 108-8215 (JP)
(74) Representative: Intès, Didier Gérard André
(86) International application number: PCT/JP2012/080783
(87) International publication number: WO 2013/145443

(56) References cited:
- EP-A1- 2 045 558
- WO-A1-2008/010427
- WO-A1-2012/066945
- GB-A- 1 489 719
- JP-A- H09 178 393
- US-A- 5 027 507

## Description

### Field

The present invention relates to a tube expansion method of fixing a heat exchanger tube inserted to a tube hole of a tubesheet to the tube hole by expanding the heat exchanger tube from inside.

### Background

Conventionally, for example, in a tube expansion method described in Patent Literature 1, a tube expansion method of fixing the heat exchanger tube to the tubesheet of a heat exchanger of a steam generator or the like has been disclosed. In such a tube expansion method, as a first step, each end portion of the corresponding heat exchanger tube is inserted into the tube hole passing through the tubesheet in a plate thickness direction, and each end portion of the heat exchanger tube inserted into the tube hole is subjected to a roller tube expansion in a range of a predetermined distance toward an end surface of a secondary side from an end surface of a primary side of the tubesheet. Next, as a second step, in order to block a gap between an outer circumferential surface of the expanded heat exchanger tube and an inner circumferential surface of the tube hole, seal welding is performed on the end surface of the primary side of the tubesheet along the outer circumferential surface of the heat exchanger tube and the inner circumferential surface of the tube hole. Next, as a third step, each end portion of the heat exchanger tube inserted into the tube hole is subjected to a hydraulic tube expansion in the range of a predetermined distance toward the end surface of the primary side from the end surface of the secondary side of the tubesheet. Next, as a fourth step, each end portion of the heat exchanger tube inserted into the tube hole is subjected to the roller tube expansion in a range of not being expanded yet in the first step and the third step, and the entire outer circumferential surface of each end portion of the heat exchanger tube inserted into the tube hole is brought into close contact with the inner circumferential surface of the tube hole.

### Citation List

### Patent Literature

Patent Literature 1: Japanese Patent Application Laid-open No. 2008-025918

### Summary

### Technical Problem

Incidentally, since the tube hole of the tubesheet is formed by a drill, in some cases, there is damage along the circumferential direction with respect to the inner circumferential surface in the middle of the axial direction of the tube hole, by chips being rarely caught by the drill. In this case, when performing the tube expansion by the above-described conventional tube expansion method, a recessed portion may be formed on the inner circumferential surface of the heat exchanger tube expanded by the hydraulic tube expansion of the third step, by being expanded along the damage. For this reason, there is a problem in that residual stress may be locally generated at a position of the recessed portion, or stress concentration may occur due to thermal expansion during operation of the heat exchanger.

The present invention has been made to solve the above-described problems, and an object thereof is to provide a tube expansion method capable of preventing a situation in which a recessed portion is formed on the inner circumferential surface of the heat exchanger tube, when there is damage along the circumferential direction with respect to the inner circumferential surface in the middle of the axial direction of the tube hole.

### Solution to Problem

According to the present invention, in order to achieve the object, there is provided a tube expansion method of fixing a heat exchanger tube inserted to a tube hole of a tubesheet by tube expansion, the method including: when there is a damage along a circumferential direction with respect to an inner circumferential surface in the middle of an axial direction of the tube hole, a first hydraulic tube expansion step of performing a hydraulic tube expansion in a range including the damage at a pressure of 15% to 70%; and a second hydraulic tube expansion step of performing the hydraulic tube expansion in each range divided except the damage at a pressure of 100%.

According to the tube expansion method, by initially performing a first hydraulic tube expansion step, the outer circumferential surface of the heat exchanger tube is expanded in advance to fit the inner circumferential surface of the tube hole in the range including the damage. Moreover, by subsequently performing a second hydraulic tube expansion step, each range divided except the damage is subjected to the main tube expansion, and the heat exchanger tube has a uniform inner diameter even at a position of the damage, while the outer circumferential surface of the heat exchanger tube comes into close contact with the inner circumferential surface of the tube hole. As a result, when the inner circumferential surface in the middle of the axial direction of the tube hole is damaged along the circumferential direction, it is possible to prevent a situation in which the recessed portion is formed on the inner circumferential surface of the heat exchanger tube.

The method may further comprise a first roller tube expansion step of performing a roller tube expansion in a range A of a predetermined distance that does not reach the damage toward an end surface of the other side from an end surface of one side of the tubesheet in which the end portion of the heat exchanger tube is located; the first hydraulic tube expansion step may be performed in a range B including the damage as a range that is except the range of A and a predetermined distance toward the end surface of one side from the end surface of the other side of the tubesheet; the second hydraulic tube expansion step may be performed in each range C divided from the range B except the damage; and the method may further comprise a second roller tube expansion step of performing the roller tube expansion in a range D that is not expanded yet between the range A and the range B.

According to such a tube expansion method, by initially performing the first hydraulic tube expansion step on the hydraulic tube expansion, the outer circumferential surface of the heat exchanger tube is expanded in advance to fit the inner circumferential surface of the tube hole in the range B including the damage. Moreover, by subsequently performing the second hydraulic tube expansion step, each range C divided except the damage is subjected to the main tube expansion, and the heat exchanger tube has the uniform inner diameter even at a position of the damage, while the outer circumferential surface of the heat exchanger tube comes into close contact with the inner circumferential surface of the tube hole. As a result, when the inner circumferential surface in the middle of the axial direction of the tube hole is damaged along the circumferential direction, it is possible to prevent a situation in which the recessed portion is formed on the inner circumferential surface of the heat exchanger tube. In addition, by bringing the end portion of the heat exchanger tube into close contact with the tube hole by the first roller tube expansion step, by subsequently performing each hydraulic tube expansion step, and thereafter, by expanding a boundary between the first roller tube expansion step and each hydraulic tube expansion step by the second roller tube expansion step, it is possible to perform high-precision tube expansion by positioning the end portion of the heat exchanger tube. Advantageous Effects of Invention

According to the present invention, when the inner circumferential surface in the middle of the axial direction of the tube hole is damaged along the circumferential direction, it is possible to prevent a situation in which the recessed portion is formed on the inner circumferential surface of the heat exchanger tube. Brief Description of Drawings

FIGS. 1A and 1B are explanatory views of a tube hole that is expanded by a tube expansion method according to an embodiment of the present invention.
FIGS. 2A to 2F are process diagrams of the tube expansion method according to the embodiment of the present invention.
FIG. 3 is an explanatory view of a roller tube expander that is used in the tube expansion method according to the embodiment of the present invention.
FIG. 4 is an explanatory view of the hydraulic tube expander that is used in the tube expansion method according to the embodiment of the present invention.
FIG. 5 is an explanatory view of a hydraulic tube expander that is used in the tube expansion method according to the embodiment of the present invention.
FIG. 6 is an explanatory view illustrating a configuration of a steam generator to which the tube expansion method according to the embodiment of the present invention is applied.
FIG. 7 is a schematic diagram illustrating an example of a nuclear power apparatus to which the steam generator is applied.

### Description of Embodiments

An embodiment according to the present invention will be described below in detail with reference to the drawings. It is not intended that the invention be limited by the embodiment. Furthermore, components in the embodiment described below include components that are easily replaceable by those skilled in the art or substantially the same components.

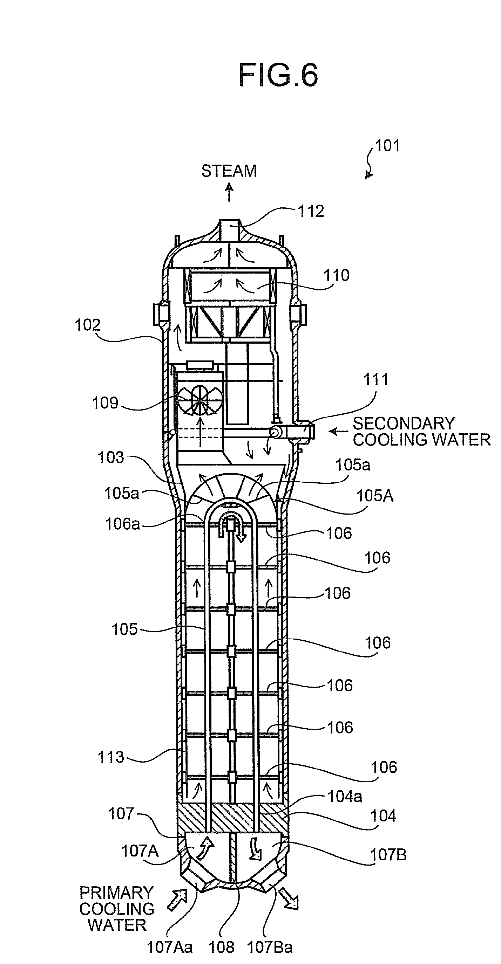

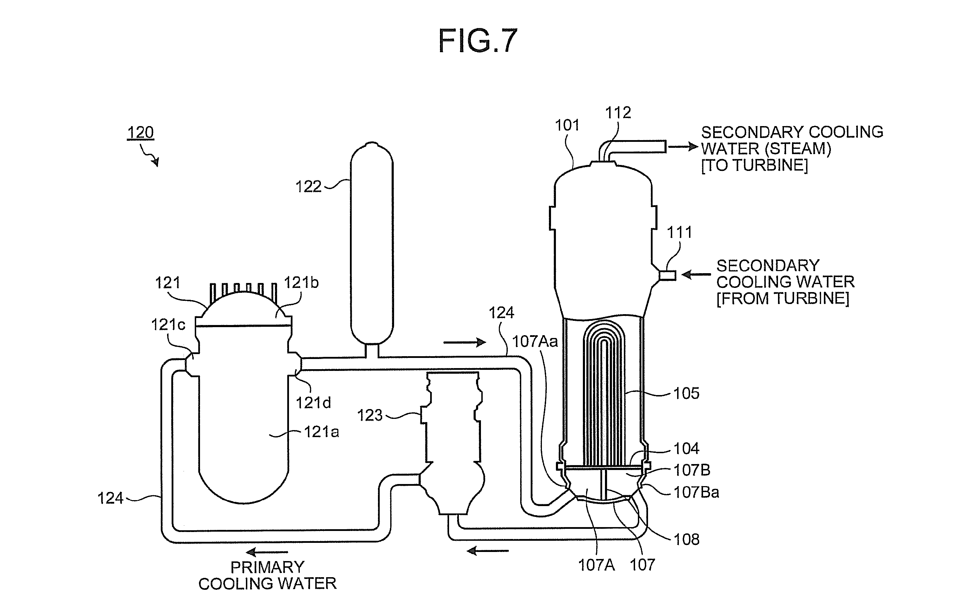

FIG. 6 is an explanatory view illustrating a configuration of a steam generator to which the tube expansion method according to the present embodiment is applied, and FIG. 7 is a schematic diagram illustrating an example of a nuclear power apparatus to which the steam generator is applied.

As illustrated in FIG. 6, a steam generator 101 has a body portion 102. The body portion 102 extends in the vertical direction and has a closed hollow cylindrical shape, and a lower half portion thereof has a diameter slightly smaller than that of an upper half portion. In the lower half portion of the body portion 102, a tube bundle shroud 103 having a cylindrical shape disposed at a predetermined distance from an inner wall surface of the body portion 102 is provided. A lower end portion of the tube bundle shroud 103 extends to the vicinity of a tubesheet 104 disposed below the lower half portion of the body portion 102. A heat exchanger tube group 105A is provided in the tube bundle shroud 103. The heat exchanger tube group 105A includes a plurality of heat exchanger tubes 105 having an inverted U-shape. The above-described inverted U-shaped circular arc portion of the heat exchanger tube 105 is disposed at an upper end portion of the heat exchanger tube group 105A. The heat exchanger tube 105 constitutes a heat exchanger tube layer in which the large-diameter circular arc portions are arranged outward from the center, and by changing the diameter of the heat exchanger tube layer while overlapping, the upper end portion of the heat exchanger tube group 105A is formed in a hemispherical shape. Between the circular arc portions of each heat exchanger tube layer, the hemispherical portion of the heat exchanger tube group 105A is provided with a vibration suppression member 105a for suppressing fluid-induced vibration that may occur when the primary cooling water passes through the heat exchanger tube 105 is provided. Moreover, the lower end portion of each heat exchanger tube 105 is inserted and supported into the tube hole 104a of the tubesheet 104 while the U-shaped circular arc portion faces upward, and the intermediate portion thereof is supported by the tube bundle shroud 103 via a plurality of tube support plates 106. The tube support plates 106 are formed with a large number of tube holes 106a, and support each heat exchanger tube 105 by inserting each heat exchanger tube 105 into the tube holes 106a.

A channel head 107 is joined to a lower end portion of the body portion 102. The interior of the channel head 107 is divided into an inlet side water chamber 107A and an outlet side water chamber 107B by a partition plate 108, in a state in which an opening edge formed in a bowl shape is joined to the tubesheet 104. The inlet side water chamber 107A is in communication with one end portion of each heat exchanger tube 105, and the outlet side water chamber 107B is in communication with the other end portion of each heat exchanger tube 105. Furthermore, the inlet side water chamber 107A is formed with an inlet side tube base 107Aa leading to the outside of the body portion 102, and the outlet side water chamber 107B is formed with an outlet side tube base 107Ba leading to the outside of the body portion 102. Moreover, the inlet side tube base 107Aa is connected to a cooling water tube 124 (see FIG. 7) to which the primary cooling water is sent from a pressurized water reactor, and the outlet side tube base 107Ba is connected the cooling water tube 124 (see FIG. 7) that sends the primary cooling water after the heat exchanger to the pressurized water reactor. In addition, although not illustrated in the drawings, the inlet side water chamber 107A and the outlet side water chamber 107B are formed with a working manhole through which an operator enters the water chambers 107A and 107B during maintenance and inspection.

Furthermore, in the upper half portion of the body portion 102, a gas-water separator 109 that separates the water supply into steam and hot water, and a moisture separator 110 that removes the moisture of the separated steam to provide a state close to the dry steam are provided. A water supply tube 111 is inserted between the gas-water separator 109 and the heat exchanger tube group 105A, and the water supply tube 111 performs the water supply of the secondary cooling water into the body portion 102 from the outside. Further, at the upper end portion, the body portion 102 is formed with a steam discharge port 112. Further, in the lower half portion, the body portion 102 is formed with a water supply path 113 that allows the secondary cooling water supplied into the body portion 102 from the water supply tube 111 to flow down between the body portion 102 and the tube bundle shroud 103, return back by the tubesheet 104, and rise along the heat exchanger tube group 105A. In addition, the steam discharge port 112 is connected to a cooling water piping (not illustrated) that sends steam to a turbine, and the water supply tube 111 is connected to a cooling water piping (not illustrated) for supplying the secondary cooling water in which steam used in the turbine is cooled in a condenser (not illustrated).

As illustrated in FIG. 7, the above-described steam generator 101 is applied to a nuclear power apparatus 120. The nuclear power apparatus 120 illustrated in FIG. 7 is a pressurized water reactor (PWR). In the nuclear power apparatus 120, a reactor vessel 121, a pressurizer 122, a steam generator 101, and a pump 123 are sequentially connected by a cooling water tube 124, and a circulation path of the primary cooling water is formed. Further, the circulation path of the secondary cooling water is formed between the steam generator 101 and a turbine (not illustrated).

The reactor vessel 121 is formed by a vessel main body 121a and a vessel lid 121b mounted thereon so that a fuel assembly (not illustrated) can be inserted and removed. The vessel lid 121b is provided to be able to open and close with respect to the vessel main body 121a. The vessel main body 121a forms a cylindrical shape in which the upper part thereof opens and the lower part thereof is closed in a hemispherical shape, and an inlet side tube base 121c and an outlet side tube base 121d that supply and discharge the light water as the primary cooling water are provided at the top thereof. The outlet side tube base 121d is connected to the cooling water tube 124 so as to communicate with the inlet side tube base 107Aa of the steam generator 101. Further, the inlet side tube base 121c is connected the cooling water tube 124 so as to communicate with the outlet side tube base 107Ba of the steam generator 101.

In the nuclear power apparatus 120, the primary cooling water is heated by the reactor vessel 121 to enter a high-pressure and high-temperature state, and the primary cooling water is supplied to the steam generator 101 via the cooling water tube 124, while being maintained at a constant pressure by being pressurized by the pressurizer 122. In the steam generator 101, the heated primary cooling water is sent to the inlet side water chamber 107A, circulates through the large number of heat exchanger tubes 105, and reaches the outlet side water chamber 107B. Meanwhile, the secondary cooling water cooled by the condenser is sent to the water supply tube 111, and rises along the heat exchanger tube group 105A through a water supply path 113 of the body portion 102. At this time, within the body portion 102, heat is exchanged between the high-pressure and high-temperature primary cooling water and the secondary cooling water. Moreover, the cooled primary cooling water is returned to the pressurized water reactor from the outlet side water chamber 107B. Meanwhile, the secondary cooling water subjected to heat exchange with the high-pressure and high-temperature primary cooling water rises in the body portion 102, and is separated into the steam and the hot water in the gas-water separator 109. The separated steam is sent to the turbine from the steam discharge port 112 after the moisture is removed by the moisture separator 110. The turbine is driven by steam of the secondary cooling water. Moreover, the power of the turbine is transmitted to a generator (not illustrated) to generate electricity. The steam supplied to driving of the turbine is supplied to the steam generator 101, by being condensed and converted into water. Meanwhile, the primary cooling water after the heat exchange in the steam generator 101 is collected to the pump 123 side via the cooling water tube 124.

Concerning the above-described steam generator 101, the heat exchanger tube 105 is mounted to the upper half portion of the body portion 102, or to the lower half portion of the body portion 102 before the gas-water separator 109, the moisture separator 110, and the water supply tube 111 provided on the upper half portion are disposed. In this case, the tube bundle shroud 103, the tubesheet 104, and each tube support plate 106 are mounted to the lower half portion of the body portion 102, in a state of being laterally placed on a pedestal (not illustrated). The tubesheet 104 and the tube support plate 106 are provided with tube holes 104a and 106a for inserting the end portions of the heat exchanger tubes 105 therein.

The heat exchanger tube 105 is mounted to the lower half portion of the body portion 102. From the lower half portion and the upper half portion (upper side of FIG. 6) of the body portion 102, both end portions of the heat exchanger tube 105 are inserted into the tube hole 106a of the tube support plate 106, and are inserted into the tube hole 104a of the tubesheet 104 such that the circular arc portion formed in a U shape is disposed in a hemispherical shape on the upper side in the lower half portion of the body portion 102.

The heat exchanger tubes 105 inserted into the tube holes 106a and 104a of the tube support plate 106 and the tubesheet 104 are based on a heat exchanger tube of one layer formed by horizontally arranging a plurality of tubes so that the smallest-diameter circular arc portion formed in a U shape is located at the center and the gradually large-diameter circular arc portion is located outward therefrom. Moreover, the vibration suppression member 105a is disposed at a predetermined position between each heat exchanger tube layer, while stacking the heat exchanger tube layers. As a result, a portion of the circular arc portion of the heat exchanger tube 105 is formed in a hemispherical shape.

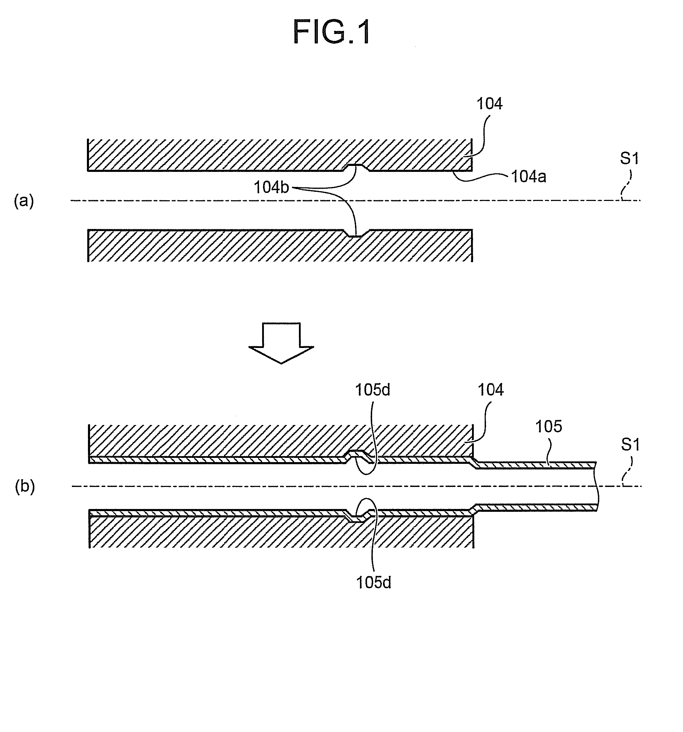

FIGS. 1A and 1B are explanatory views of the tube hole that is expanded by the tube expansion method according to the present embodiment. As described above, when the heat exchanger tube layer (heat exchanger tube 105) is inserted into the tube hole 104a of the tubesheet 104, the tube hole 104a is formed on the tubesheet 104 by a drill, but due to the chips caught by the drill, as illustrated in FIG. 1A, in some cases, there is a damage 104b along the circumferential direction on the inner circumferential surface in the middle of the axis S1 direction of the tube hole 104a. In this case, when expanding the tube by the conventional tube expansion method, as illustrated in FIG. 1B, when the heat exchanger tube 105 expanded by a hydraulic tube expansion is expanded along the damage 104b, recessed portions 105d can be formed on the inner circumferential surface. For this reason, there is a problem of occurrence of local residual stress at a position of the recessed portion 105d, or occurrence of stress concentration due to thermal expansion during operation of the heat exchanger.

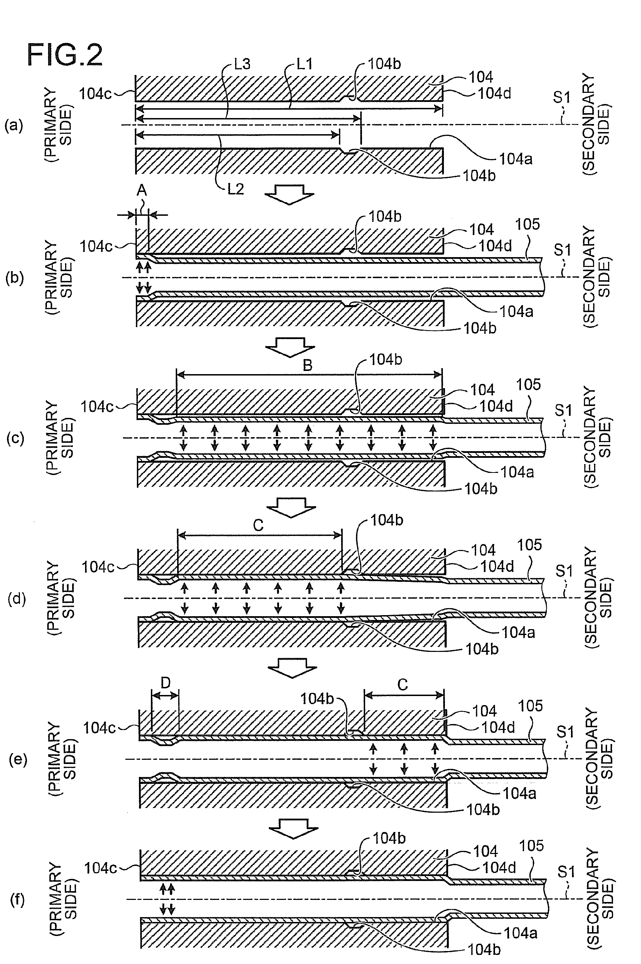

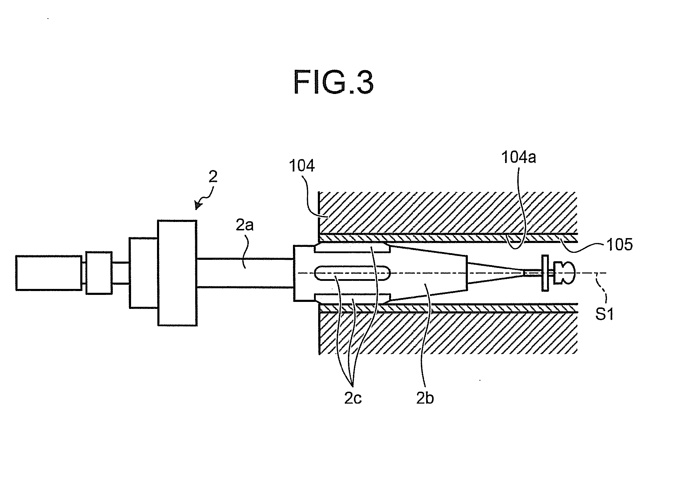

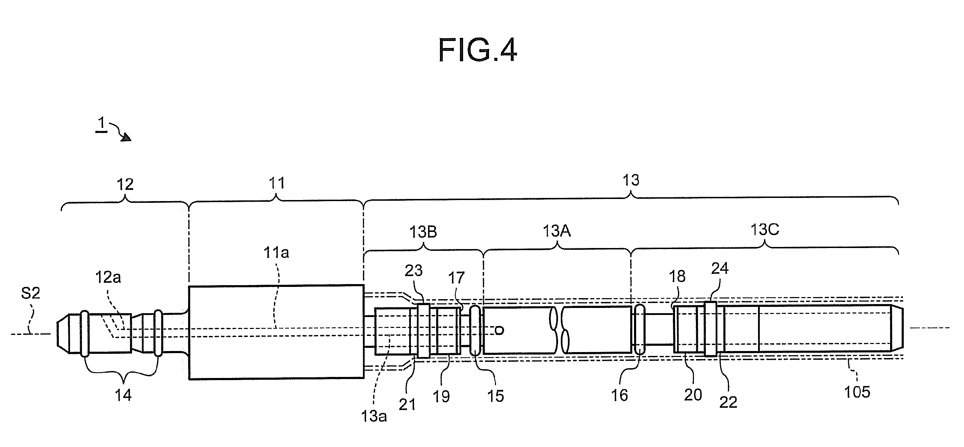

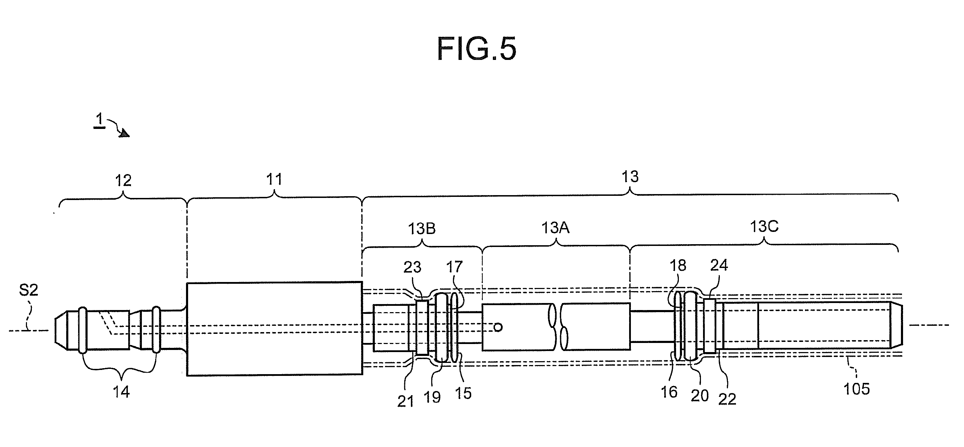

Thus, the above-described problem is solved by expanding the heat exchanger tube 105 using the tube expansion method of this embodiment. FIGS. 2A to 2F are process diagrams of the tube expansion method according to the present embodiment, FIG. 3 is an explanatory view of a roller tube expander used in the tube expansion method according to the present embodiment, and FIGS. 4 and 5 are explanatory views of a hydraulic tube expander used in the tube expansion method according to the embodiment.

First, as illustrated in FIG. 2A, after machining the tube hole 104a in the tubesheet 104, the inner circumferential surface of the tube hole 104a is checked, and when the damage 104b is found on the inner circumferential surface in the middle of the axis S1 direction of the tube hole 104a along the circumferential direction by the check, a distance L1 in the axis S1 direction from an end surface 104c of the primary side (one side) of the tubesheet 104 to an end surface 104d of the secondary side (the other side), a distance L2 in the axis S1 direction from the end surface 104c of the primary side of the tubesheet 104 to a leading end of the damage 104b, and a distance L3 in the axis S1 direction from the end surface 104c of the primary side of the tubesheet 104 to a terminal end of the damage 104b are measured. That is, the entire distance L1 in the axis S1 direction of the tube hole 104a, and a range (L3-L2) of the damage 104b in the axis S1 direction from the end surface 104c of the primary side of the tubesheet 104.

Next, as illustrated in FIG. 2B, after the heat exchanger tube 105 is inserted into the tube hole 104a, in a range A of a predetermined distance that does not reach the damage 104b toward the end surface 104d of the secondary side from the end surface 104c of the primary side of the tubesheet 104 in which the end portion of the heat exchanger tube 105 is located, the roller tube expansion is performed by a roller tube expander 2 (see FIG. 3) (a first roller tube expansion step). In addition, the range A is a range of several mm toward the end surface 104d of the secondary side from the end surface 104c of the primary side of the tubesheet 104. Moreover, after the tube expansion of the range A, in the end surface 104c of the primary side of the tubesheet 104, in order to block a slight gap between the outer circumferential surface of the end portion of the expanded heat exchanger tube 105 and the inner circumferential surface of the end portion of the tube hole 104a, seal welding is performed along the outer circumferential surface of the heat exchanger tube 105 and the inner circumferential surface of the tube hole 104a.

As illustrated in FIG. 3, the roller tube expander 2 is provided with a gauge 2b at a leading end portion of a mandrel 2a that can be inserted into the heat exchanger tube 105. A roller 2c is mounted to the periphery of the gauge 2b in a revolvable and rotatable manner. Moreover, by inserting the roller tube expander 2 into the heat exchanger tube 105 and give rotational torque from the base end side of the mandrel 2a, the roller 2c revolves and rotates to apply the tube expansion force to the heat exchanger tube 105.

Next, as illustrated in FIG. 2C, except for the range A, in a range B including the damage 104b of a predetermined distance toward the end surface 104c of the primary side from (slightly primary side of) the end surface 104d of the secondary side of the tubesheet 104, the hydraulic tube expansion is performed at a pressure of 15% to 70% by a hydraulic tube expander 1 (see FIGS. 4 and 5) (a first hydraulic tube expansion step). In addition, the pressure of 15% to 70% is pressure obtained when the pressure in the subsequent hydraulic tube expansion (a second liquid tube expansion step) is assumed to be 100%. Further, the slightly primary side of the end surface 104d of the secondary side of the tubesheet 104 is a position that enters the primary side from the end surface 104d of the secondary side of the tubesheet 104 by a small amount.

Next, as illustrated in FIGS. 2D and 2E, in each range C divided from the range B except the damage 104b, each hydraulic tube expansion at a pressure of 100% is performed by the hydraulic tube expander 1 (see FIGS. 5 and 4) (a second hydraulic tube expansion step).

As illustrated in FIGS. 4 and 5, in the hydraulic tube expander 1, a base portion 11, a liquid introduction portion 12 extending from one end of the base portion 11, and a mandrel portion 13 extending from the other end of the base portion 11 and formed based on the cylindrical shape so as to be inserted into the heat exchanger tube 105 are disposed along the axis S2.

The liquid introduction portion 12 is a portion into which the liquid is introduced from a liquid supply device (not illustrated), and is also a coupling portion that is inserted into the liquid supply portion of the liquid supply device. For this reason, an O-ring 14 is provided on the outer circumferential surface of the liquid introduction portion 12 to prevent liquid leakage from between the liquid supply portion and the liquid introduction portion 12.

The mandrel portion 13 has a first cylindrical portion 13A disposed in the middle, and a second cylindrical portion 13B and a third cylindrical portion 13C that extend toward the axis S2 direction from both ends of the first cylindrical portion 13A, respectively. The first cylindrical portion 13A is formed to have a larger outer diameter than those of the second cylindrical portion 13B and the third cylindrical portion 13C. The second cylindrical portion 13B is connected to the base portion 11, and the third cylindrical portion 13C is provided on the opposite side of the base portion 11 in the axis S2 direction.

Moreover, through holes 12a, 11a, and 13a are continuously formed to lead to the middle of the first cylindrical portion 13A from the liquid introduction portion 12 via the base portion 11 and the second cylindrical portion 13B in the axis S2 direction. The through hole 13a extends in a direction intersecting with the axis S2 at the position of the first cylindrical portion 13A and penetrates the side portion of the first cylindrical portion 13A.

In the mandrel portion 13, O-rings 15 and 16 are inserted into the second cylindrical portion 13B and the third cylindrical portion 13C to be movable in the axis S2 direction, respectively. The O-rings 15 and 16 abut against the first cylindrical portion 13A to restrict the movement. The O-rings 15 and 16 have a size to come into contact with the outer circumferential surfaces of the second cylindrical portion 13B and the third cylindrical portion 13C, and the inner circumferential surface of the unexpanded heat exchanger tube 105. Further, in the second cylindrical portion 13B and the third cylindrical portion 13C, annular guide members 17 and 18 are inserted to the outer side in the axis S2 direction of each of the O-rings 15 and 16 centered at the first cylindrical portion 13A to be movable in the axis S2 direction. Further, in the second cylindrical portion 13B and the third cylindrical portion 13C, annular deformation members 19 and 20 are inserted to the outer side of each of the annular guide members 17 and 18 centered at the first cylindrical portion 13A to be movable in the axis S2 direction. Further, in the second cylindrical portion 13B and the third cylindrical portion 13C, annular locking members 21 and 22 are fixed to the outer side of each of the annular deformation members 19 and 20 centered at the first cylindrical portion 13A. Further, annular positioning members 23 and 24 are disposed on the outer circumferential surfaces of the annular locking members 21 and 22. The annular positioning members 23 and 24 are shaped so that the outer diameters thereof have substantially the same size as the inner diameter of the unexpanded heat exchanger tube 105.

As illustrated in FIG. 4, the hydraulic tube expander 1 inserts the mandrel portion 13 into the heat exchanger tube 105. At this time, the axis S2 of the mandrel portion 13 is supported by the annular positioning members 23 and 24 so as to be positioned at the center of the heat exchanger tube 105. Moreover, by pumping the liquid from the liquid supply device, the liquid is ejected to the outer side of the first cylindrical portion 13A via the through holes 12a, 11a, and 13a. Then, while the O-rings 15 and 16 are pushed by the liquid to move to the outer side centered at the first cylindrical portion 13A, the O-rings 15 and 16 abut against the annular guide members 17 and 18 to expand outward in the radial direction, and the annular deformation members 19 and 20 pressed against the annular guide members 17 and 18 are fastened by the annular locking members 21 and 22 and deformed outward in the radial direction. For this reason, the pressure of liquid increases between the O-rings 15 and 16, and the pressure is converted into a tube expansion force to expand the heat exchanger tube 105.

The hydraulic tube expander 1 determines the distance in the axis S2 direction that can be expanded depending on the distance in the axis S2 direction of the annular locking members 21 and 22. That is, the above-described ranges B and C of the hydraulic tube expansion can be set by changing the distance in the axis S2 direction of the annular locking members 21 and 22 of the hydraulic tube expander 1.

Next, referring back to FIGS. 2A to 2F, as illustrated in FIGS. 2E and 2F, a range D that is not expanded yet between the range A and the range B is subjected to the roller tube expansion (a second roller tube expansion step).

In this way, the tube expansion method of the embodiment includes, when there is a damage 104b along the circumferential direction on the inner circumferential surface in the middle of the axis S1 direction of the tube hole 104a, a first hydraulic tube expansion step of performing the hydraulic tube expansion in the range B including the damage 104b at a pressure of 15% to 70%, and thereafter, a second hydraulic tube expansion step of performing the hydraulic tube expansion in each range C divided except the damage 104b at a pressure of 100%.

According to the tube expansion method, by initially performing the first hydraulic tube expansion step, in the range B including the damage 104b, the tube expansion is performed in advance so that the outer circumferential surface of the heat exchanger tube 105 fits to the inner circumferential surface of the tube hole 104a. Moreover, by subsequently performing the second hydraulic tube expansion step, each range C divided except the damage 104b is subjected to the main tube expansion, and the heat exchanger tube 105 has a uniform inner diameter even at the position of the damage 104b, while the outer circumferential surface of the heat exchanger tube 105 comes into close contact with the inner circumferential surface of the tube hole 104a. As a result, when there is damage 104b along the circumferential direction on the inner circumferential surface in the middle of the axis S1 direction of the tube hole 104a, it is possible prevent a situation in which the recessed portion 105d is formed on the inner circumferential surface of the heat exchanger tube 105.

Further, the tube expansion method of this embodiment includes, when there is damage 104b along the circumferential direction on the inner circumferential surface in the middle of the axis S1 direction of the tube hole 104a, a first roller tube expansion step of performing the roller tube expansion in the range A of a predetermined distance that does not reach the damage 104b toward the end surface of the secondary side (the other side) from the end surface of the primary side (one side) of the tubesheet 104 in which the end portion of the heat exchanger tube 105 is positioned, thereafter, the first hydraulic tube expansion step of performing the hydraulic tube expansion at a pressure of 15% to 70% in the range B including the damage 104b as a range of a predetermined distance toward the end surface of one side from end surface of the other side of the tubesheet 104 except the range of A, thereafter, a second hydraulic tube expansion step of performing each hydraulic tube expansion at a pressure of 100% in each range C divided from the range B except the damage 104b, and thereafter, a second roller tube expansion step of performing the roller tube expansion in the range D that is not expanded yet between the range A and the range B.

According to the tube expansion method, regarding the hydraulic tube expansion, by initially performing the first hydraulic tube expansion step, the tube expansion is performed in advance so that the outer circumferential surface of the heat exchanger tube 105 fits to the inner circumferential surface of the tube hole 104a in the range B including the damage 104b. Moreover, by subsequently performing the second hydraulic tube expansion step, each range C divided except the damage 104b is subjected to the main tube expansion, and the heat exchanger tube 105 has the uniform inner diameter even at the position of the damage 104b, while the outer circumferential surface of the heat exchanger tube 105 comes into close contact with the inner circumferential surface of the tube hole 104a. As a result, when there is a damage 104b along the circumferential direction on the inner circumferential surface in the middle of the axis S1 direction of the tube hole 104a, it is possible to prevent a situation in which the recessed portion 105d is formed on the inner circumferential surface of the heat exchanger tube 105. In addition, by bringing the end portion of the heat exchanger tube 105 into close contact with the tube hole 104a by the first roller tube expansion step, by subsequently performing the hydraulic tube expansion step, and by subsequently expanding the boundary between the first roller tube expansion step and each hydraulic tube expansion step by the second roller tube expansion step, it is possible to perform the high-precision tube expansion by positioning the end portion of the heat exchanger tube 105. Reference Signs List

- 1: HYDRAULIC TUBE EXPANDER

- 2: ROLLER TUBE EXPANDER
- 104: TUBESHEET
- 104a: TUBE HOLE
- 104b: DAMAGE
- 104c: END SURFACE OF PRIMARY SIDE (ONE SIDE)
- 104d: END SURFACE OF SECONDARY SIDE (THE OTHER SIDE)
- 105: HEAT EXCHANGER TUBE
- S1: AXIS

## Claims

1. A tube expansion method of fixing a heat exchanger tube (105) inserted to a tube hole (104a) of a tubesheet (104) by tube expansion, the method being **characterized in that** it comprises:
when there is a damage (104b) along a circumferential direction with respect to an inner circumferential surface in the middle of an axial direction of the tube hole (104a),
a first hydraulic tube expansion step of performing a hydraulic tube expansion in a range including the damage (104b) at a pressure of 15% to 70%; and
a second hydraulic tube expansion step of performing the hydraulic tube expansion in each range divided except the damage (104b) at a pressure of 100%.

2. The tube expansion method according to claim 1, further comprising a first roller tube expansion step of performing a roller tube expansion in a range A of a predetermined distance that does not reach the damage (104b) toward an end surface of the other side from an end surface of one side of the tubesheet (104) in which the end portion of the heat exchanger tube (105) is located,
wherein the first hydraulic tube expansion step is performed in a range B including the damage (104b) as a range that is except the range of A and a predetermined distance toward the end surface of one side from the end surface of the other side of the tubesheet (104),
wherein the second hydraulic tube expansion step is performed in each range C divided from the range B except the damage (104b),
the method further comprising a second roller tube expansion step of performing the roller tube expansion in a range D that is not expanded yet between the range A and the range B.

## Patentansprüche

1. Röhrenaufweitungsverfahren zum Befestigen einer Wärmetauscherröhre (105), die in ein Röhrenloch (104a) eines Röhrenblechs (104) eingeführt wurde, durch Röhrenaufweitung, wobei das Verfahren **dadurch gekennzeichnet ist, dass** es umfasst:
wenn entlang einer Umfangsrichtung mit Bezug auf eine Innenumfangsfläche in der Mitte einer axialen Richtung des Röhrenlochs (104a) ein Schaden (104b) vorliegt,
einen ersten hydraulischen Röhrenaufweitungsschritt zum Ausführen einer hydraulischen Röhrenaufweitung in einem Bereich, der den Schaden (104b) enthält, mit einem Druck von 15 % bis 70 %;
und einen zweiten hydraulischen Röhrenaufweitungsschritt zum Ausführen der hydraulischen Röhrenaufweitung in jedem abgeteilten Bereich, der nicht den Schaden (104b) enthält, mit einem Druck von 100 %.

2. Röhrenaufweitungsverfahren nach Anspruch 1, ferner umfassend einen ersten Rollenröhrenaufweitungsschritt zum Ausführen einer Rollenröhrenaufweitung in einem Bereich A um eine zuvor festgelegten Distanz, die nicht den Schaden (104b) erreicht, in Richtung einer Endfläche der anderen Seite von einer Endfläche einer Seite des Röhrenblechs (104), in der sich der Endabschnitt der Wärmetauscherröhre (105) befindet,
wobei der erste hydraulische Röhrenaufweitungsschritt in einem Bereich B, der den Schaden (104b) enthält, als einem Bereich, der nicht den Bereich von A enthält, und um eine zuvor festgelegte Distanz in Richtung der Endfläche einer Seite von der Endfläche der anderen Seite des Röhrenblechs (104) ausgeführt wird,
wobei der zweite hydraulische Röhrenaufweitungsschritt in jedem Bereich C ausgeführt wird, der von dem Bereich B abgeteilt ist und nicht den Schaden (104b) enthält,
wobei das Verfahren ferner einen zweiten Rollenröhrenaufweitungsschritt zum Ausführen der Rollenröhrenaufweitung in einem Bereich D umfasst, der zwischen dem Bereich A und dem Bereich B noch nicht aufgeweitet ist.

## Revendications

1. Procédé d'expansion de tube pour la fixation d'un tube d'échangeur de chaleur (105) inséré dans un trou de tube (104a) d'une plaque porte-tube (104) par expansion de tube, le procédé étant **caractérisé en ce qu'**il comprend :
quand il y a un endommagement (104b) le long d'une direction circonférentielle par rapport à une surface circonférentielle intérieure au milieu d'une direction axiale du trou de tube (104a),
une première étape d'expansion hydraulique de tube dans laquelle on réalise une expansion hydraulique de tube dans une plage comprenant l'endommagement (104b) à une pression de 15% à 70% ; et
une deuxième étape d'expansion hydraulique de tube dans laquelle on réalise l'expansion hydraulique de tube dans chaque plage divisée à l'exception de l'endommagement (104b) à une pression de 100%.

2. Procédé d'expansion de tube selon la revendication 1, comprenant en outre une première étape d'expansion de tube à rouleau dans laquelle on réalise une expansion de tube à rouleau dans une plage A d'une distance prédéterminée qui n'atteint pas l'endommagement (104b) vers une surface d'extrémité de l'autre côté depuis une surface d'extrémité d'un côté de la plaque porte-tube (104) dans laquelle la partie d'extrémité du tube d'échangeur de chaleur (105) se trouve,
dans lequel la première étape d'expansion hydraulique de tube est réalisée dans une plage B comprenant l'endommagement (104b) comme plage qui est à l'exception de la plage A et une distance prédéterminée vers la surface d'extrémité d'un côté depuis la surface d'extrémité de l'autre côté de la plaque porte-tube (104),
dans lequel la deuxième étape d'expansion hydraulique de tube est réalisée dans chaque plage C divisée de la plage B à l'exception de l'endommagement (104b),
le procédé comprenant en outre une deuxième étape d'expansion de tube à rouleau dans laquelle on réalise l'expansion de tube à rouleau dans une plage D qui n'a pas encore subi d'expansion entre la plage A et la plage B.
